# EUROPÄISCHE PATENTANMELDUNG

(11) **EP 3 557 193 A1**
(43) Veröffentlichungstag der Anmeldung: **23.10.2019**
(21) Anmeldenummer: 18168015.8
(22) Anmeldetag: 18.04.2018
(51) Int. Cl.: G01D 11/30

(54) **SENSORVORRICHTUNG UND VERFAHREN ZUR ÜBERPRÜFUNG EINES SCHIENENABSCHNITTES**

(71) Anmelder: Siemens Mobility GmbH, 81739 München (DE)
(72) Erfinder: ARNOLD, Eik, 81739 München (DE); LOCH, Jörg, 38122 Braunschweig (DE); LOSADA MARTIN, Cesar, 95747 Roseville, CA (US); GOLDAMMER, Matthias, 80687 München (DE); DUDECK, Sven Gerhard, 85551 Kirchheim b. München (DE)

(57) **Zusammenfassung**

Es wird eine Sensorvorrichtung (1) zur Überprüfung eines Schienenabschnittes (2), insbesondere eines Eisenbahnschienenabschnittes, vorgeschlagen, die ein Sensorelement (4) und wenigstens ein magnetisches Befestigungselement (41, 42, 43) umfasst, wobei die Sensorvorrichtung (1) mittels des magnetischen Befestigungselementes (41, 42, 43) an dem Schienenabschnitt (2) anbringbar ist.

Weiterhin betrifft die Erfindung ein Verfahren zur Überprüfung eines Schienenabschnittes (2) mit einer Sensorvorrichtung (1).

## Beschreibung

Die Erfindung betrifft eine Sensorvorrichtung zur Überprüfung eines Schienenabschnittes. Weiterhin betrifft die Erfindung ein Verfahren zur Überprüfung eines Schienenabschnittes, insbesondere eines Eisenbahnschienenabschnittes. Hierzu wird eine erfindungsgemäße Sensorvorrichtung an dem Schienenabschnitt angeordnet.

Zur Überwachung von Schienenabschnitten beziehungsweise Schienen, insbesondere Abschnitte von Eisenbahnschienen, werden Sensoren, beispielsweise Schwingungssensoren zur Brucherkennung, verwendet. Hierzu werden die Sensoren an dem Schienenabschnitt mittels einer mechanischen kraftschlüssigen Verbindung, beispielsweise mittels einer Klammerverbindung, einer Klemmverbindung, einer Schraubverbindung oder einer Schweißverbindung, befestigt. Ein Nachteil hierbei ist, dass eine nachträgliche Änderung der räumlichen Position des Sensors nur mit großem Aufwand möglich ist. Das ist deshalb der Fall, da die mechanische Verbindung zwischen dem Sensor und dem Schienenabschnitt derart fest sein muss, dass diese eine jahrelange stabile Verwendung des Sensors sicherstellt. Allerdings kann eine Änderung der räumlichen Position des Sensors geboten sein, beispielsweise zur Verbesserung des Signal-zu-Rauschverhältnisses.

Als Sensoren können Beschleunigungssensoren oder optische Sensoren verwendet werden. Aufgrund des relevanten Frequenzbereiches von weniger als 100 Kilohertz kann ebenfalls ein Biegesensor verwendet werden. Hierbei wird der Biegesensor flächig an dem zu prüfenden Schienenabschnitt mittels mechanischer Befestigungselemente befestigt, um eine Verformung des Schienenabschnittes zu erfassen. Die mechanischen Befestigungselemente können hierbei die Messung nachteilig beeinflussen, beispielsweise über eine Änderung der Resonanzfrequenz oder einer Änderung der Dämpfung einer zu erfassenden Schwingung. Dadurch wird das Signal-zu-Rauschverhältnis verringert.

Der vorliegenden Erfindung liegt die Aufgabe zugrunde, eine Sensorvorrichtung zur Überprüfung eines Schienenabschnittes mit einer verbesserten Befestigung bereitzustellen.

Die Aufgabe wird durch eine Sensorvorrichtung mit den Merkmalen des unabhängigen Patentanspruches 1 sowie durch ein Verfahren mit den Merkmalen des unabhängigen Patentanspruches 11 gelöst. In den abhängigen Patentansprüchen sind vorteilhafte Ausgestaltungen und Weiterbildungen der Erfindung angegeben.

Die erfindungsgemäße Sensorvorrichtung zur Überprüfung eines Schienenabschnittes, insbesondere eines Eisenbahnschienenabschnittes, umfasst ein Sensorelement und wenigstens ein magnetisches Befestigungselement. Erfindungsgemäß ist die Sensorvorrichtung mittels des magnetischen Befestigungselementes an dem Schienenabschnitt anbringbar.

Erfindungsgemäß ist das Befestigungselement magnetisch und dazu ausgebildet die Sensorvorrichtung an dem Schienenabschnitt zu befestigen oder zu fixieren. Mit anderen Worten ist die magnetische Kraft des magnetischen Befestigungselementes zur Befestigung der Sensorvorrichtung ausreichend. Dadurch erfolgt die Befestigung der Sensorvorrichtung elektromagnetisch und somit nicht mechanisch. Insbesondere kann die magnetische Wirkung des Befestigungselementes ferromagnetisch oder elektrisch gebildet werden. Vorteilhafterweise wird durch das magnetische Befestigungselement eine Befestigung ausgebildet, die flexibel ist und die Messung im Wesentlichen nicht beeinflusst.

Ein weiterer Vorteil der erfindungsgemäßen Sensorvorrichtung ist, dass diese durch die Ausbildung einer magnetischen Verbindung zwischen dem Schienenabschnitt und der Sensorvorrichtung mittels des magnetischen Befestigungselementes mit geringem Aufwand von dem Schienenabschnitt lösbar und somit räumlich versetzbar ist. Dadurch wird vorteilhafterweise eine flexible Justage, insbesondere eine Nachjustage, der räumlichen Position der Sensorvorrichtung ermöglicht.

Das erfindungsgemäße Verfahren zur Überprüfung eines Schienenabschnittes mit einer Sensorvorrichtung gemäß der vorliegenden Erfindung oder einer ihrer Ausgestaltungen umfasst wenigstens die folgenden Schritte:
- Anbringen der Sensorvorrichtung mittels des wenigstens eines magnetischen Befestigungselementes an dem Schienenabschnitt; und
- Erfassen wenigstens eines Messwertes mittels des Sensorelementes.

Es ergeben sich zur erfindungsgemäßen Sensorvorrichtung gleichartige und gleichwertige Vorteile des erfindungsgemäßen Verfahrens.

Gemäß einer vorteilhaften Ausgestaltung der Erfindung ist die Sensorvorrichtung als Biegesensor mit einem länglichen Sensorelement ausgebildet.

Vorteilhafterweise können dadurch Schwingungen des Schienenabschnittes innerhalb des relevanten Frequenzbereiches (kleiner als 100 Kilohertz) erfasst werden. Die erfindungsgemäß vorgesehene magnetische Befestigung mittels des magnetischen Befestigungselementes beeinflusst hierbei die Messung im Wesentlichen nicht. Die Länge des länglichen Sensorelementes, welches zur Erfassung des Messwertes beziehungsweise der Schwingung oder Biegung des Schienenabschnittes vorgesehen und ausgebildet ist, steht hierbei in direktem Zusammenhang zum erfassbaren Frequenzbereich beziehungsweise erfassbaren Wellenlängenbereich. Es können nur Schwingungen oder Wellen eindeutig erfasst werden, deren halbe Wellenlänge größer oder gleich der Länge des länglichen Sensorelementes ist. Mit anderen Worten muss das Sensorelement in Bezug auf seine Länge wenigstens einen Schwingungsbauch überspannen. Schwingungen mit höheren Frequenzen oder kleineren Wellenlängen werden in den niederfrequenten Bereich abgebildet.

Da das Sensorelement, insbesondere wenn es als Biegesensor ausgebildet ist, typischerweise eine vergleichsweise geringe Masse aufweist, ist eine magnetische Befestigung der Sensorvorrichtung an dem Schienenabschnitt ausreichend, um nicht durch Schwingungen vom Schienenabschnitt abgelöst zu werden.

In einer vorteilhaften Weiterbildung der Erfindung ist das magnetische Befestigungselement mittels einer stoffschlüssigen Verbindung, insbesondere mittels einer Klebeverbindung, mit dem Sensorelement verbunden.

Bevorzugt wird das magnetische Befestigungselement auf das Sensorelement aufgeklebt. Vorteilhafterweise ist eine Klebeverbindung typischerweise elektrisch nicht leitend und elastisch.

Besonders bevorzugt ist das magnetische Befestigungselement als ein Magnetstreifen und/oder eine Magnetfolie ausgebildet.

Insbesondere ist der Magnetstreifen oder die Magnetfolie auf das Sensorelement aufgeklebt. Hierzu ist besonderes bevorzugt ein Magnetstreifen vorgesehen, der ebenfalls bei Schreibtafeln (englisch: Whiteboards) verwendet wird. Ein weiterer Vorteil des Magnetstreifens oder der Magnetfolie ist, dass diese dünn sind. Dadurch wird das Signal-zu-Rauschverhältnis verbessert, da die Messung möglichst wenig beeinflusst wird.

Gemäß einer vorteilhaften Ausgestaltung der Erfindung ist das magnetische Befestigungselement wenigstens teilweise in das Sensorelement eingebettet.

Dadurch ist das magnetische Befestigungselement vorteilhafterweise in das Sensorelement wenigstens teilweise integriert. Weiterhin kann das magnetische Befestigungselement mit dem Sensorelement vergossen werden. Weiterhin kann das magnetisehe Befestigungselement mittels eines Aufdampfverfahrens am Sensorelement angeordnet oder in dieses eingebettet werden.

Grundsätzlich kann das magnetische Befestigungselement auf der dem Schienenabschnitt zugewandten oder abgewandten Seite am Sensorelement angeordnet werden. Mit anderen Worten kann das Sensorelement ebenfalls zwischen dem Schienenabschnitt und dem magnetischen Befestigungselement angeordnet sein. Dadurch wird das Sensorelement mittels des magnetischen Befestigungselementes magnetisch an den Schienenabschnitt geklemmt.

In einer vorteilhaften Ausgestaltung der Erfindung umfasst die Sensorvorrichtung wenigstens ein Klammerelement mittels welchem die Sensorvorrichtung zusätzlich mechanisch an dem Schienenabschnitt anbringbar ist.

Dadurch wird vorteilhafterweise eine dauerhafte Verbindung der Sensorvorrichtung an dem Schienenabschnitt ermöglicht. Beispielsweise ist dies nach einer erfolgreichen Justage der Sensorvorrichtung von Vorteil, das heißt nach dem, gegebenenfalls nach einem mehrmaligen Ablösen der Sensorvorrichtung, ein bestmögliche oder möglichst optimale räumliche Position am Schienenabschnitt ermittelt wurde.

Gemäß einer vorteilhaften Ausgestaltung der Erfindung ist zwischen dem Klammerelement und dem Sensorelement ein Pufferelement, insbesondere ein Schaumstoff, angeordnet.

Dadurch ist der Kontakt zwischen dem Klammerelement und dem Sensorelement vorteilhaftweise weich oder elastisch ausgestaltet. Hierbei ist es besonders bevorzugt nur im Bereich des magnetischen Befestigungselementes das Pufferelement, insbesondere den Schaumstoff, anzuordnen. Das Pufferelement ist weiterhin deshalb von Vorteil, da dadurch, insbesondere in einer Auslenkrichtung des Sensorelementes, keine Kraft auf dieses ausgeübt wird. Dennoch wird die Sensorvorrichtung am Schienenabschnitt durch das Klammerelement ausreichend mechanisch fixiert. Vorteilhafterweise wird durch das Pufferelement eine vorherige Justage der Sensorvorrichtung nicht negativ verändert.

Weiterhin kann ein Gehäuse vorgesehen sein, welches insbesondere das Sensorelement und/oder das magnetische Befestigungselement vor Umwelteinflüssen schützt.

In einer vorteilhaften Weiterbildung der Erfindung weist die Sensorvorrichtung eine Mehrzahl von Laschen auf, wobei die Sensorvorrichtung mittels der Laschen am Schienenabschnitt mittels einer Schweißverbindung und/oder Lötverbindung anbringbar ist.

Besonders bevorzugt sind die Laschen hierbei neben dem magnetischen Befestigungselement beziehungsweise neben den magnetischen Befestigungselementen angeordnet. Alternativ oder ergänzend können Laschen über die Sensorvorrichtung zur mechanischen oder stoffschlüssigen Verbindung zwischen der Sensorvorrichtung und dem Schienenabschnitt gelegt werden.

Besonders bevorzugt umfasst die Sensorvorrichtung wenigstens drei, insbesondere genau drei, magnetische Befestigungselemente, wobei jeweils eines der magnetischen Befestigungselemente in den Endbereichen und in einem Mittenbereich der Sensorvorrichtung angeordnet ist.

Mit anderen Worten ist jeweils eines der drei Befestigungselemente an einem Ende des Sensorelementes angeordnet. Ein weiteres der drei Befestigungselemente ist in der Mitte des Sensorelementes angeordnet. Dadurch wird eine magnetische Dreipunktbefestigung ausgebildet. Eine magnetische N-Punktbefestigung mit N gleich zwei oder größer als drei kann vorgesehen sein. Dadurch wird vorteilhafterweise der Einfluss der magnetischen Befestigung auf die Messung weiter vermindert. Typischerweise ist aufgrund der Ausgestaltung, dass die Länge des Sensorelementes kleiner oder gleich der halben Wellenlänge der Schwingung ist, eine Dreipunktbefestigung ausreichend.

Gemäß einer vorteilhaften Ausgestaltung der Erfindung umfasst die Sensorvorrichtung ein Prüfelement, wobei mittels des Prüfelementes eine elektrische Spannung zwischen wenigstens zwei der magnetischen Befestigungselemente anlegbar ist.

Vorteilhafterweise wird dadurch eine Überprüfung der Verbindung zwischen der Sensorvorrichtung und dem Schienenabschnitt ermöglicht. Insbesondere können dadurch Verschmutzungen, die zwischen dem Schienenabschnitt und den magnetischen Befestigungselementen vorliegen können und zu einer Verringerung der Haltekraft der magnetischen Befestigungselemente führen könnten, erkannt werden. Dadurch wird ein vorzeitiges Ablösen der Sensorvorrichtung vom Schienenabschnitt verhindert. Hierbei kann eine Verschmutzung durch einen erhöhten elektrischen Widerstand zwischen den magnetischen Befestigungselementen erkannt werden.

In einer vorteilhaften Ausgestaltung der Erfindung wird die Sensorvorrichtung mittels eines Induzierens von Wirbelströmen in den Schienenabschnitt von diesem abgelöst.

Vorteilhafterweise wird dadurch ein sicheres und effizientes Ablösen der Sensorvorrichtung ermöglicht. Insbesondere für eine Justage der Sensorvorrichtung oder Kalibrierung bezüglich ihrer räumlichen Position ist dies von Vorteil.

Weitere Vorteile, Merkmale und Einzelheiten der Erfindung ergeben sich aus dem im Folgenden beschriebenen Ausführungsbeispielen sowie anhand der Zeichnungen. Dabei zeigen schematisiert:
- Figur 1: eine Sensorvorrichtung gemäß einer ersten Ausgestaltung der Erfindung aus einer ersten Ansicht;
- Figur 2: die Sensorvorrichtung gemäß der ersten Ausgestaltung der Erfindung aus einer zweiten Ansicht;
- Figur 3: eine Sensorvorrichtung gemäß einer zweiten Ausgestaltung der Erfindung aus einer ersten Ansicht;
- Figur 4: die Sensorvorrichtung gemäß der zweiten Ausgestaltung der Erfindung aus einer zweiten Ansicht; und
- Figur 5: eine Sensorvorrichtung gemäß einer dritten Ausgestaltung der Erfindung.

Gleichartige, gleichwertige oder gleichwirkende Elemente können in einer der Figuren oder in den Figuren mit denselben Bezugszeichen versehen sein.

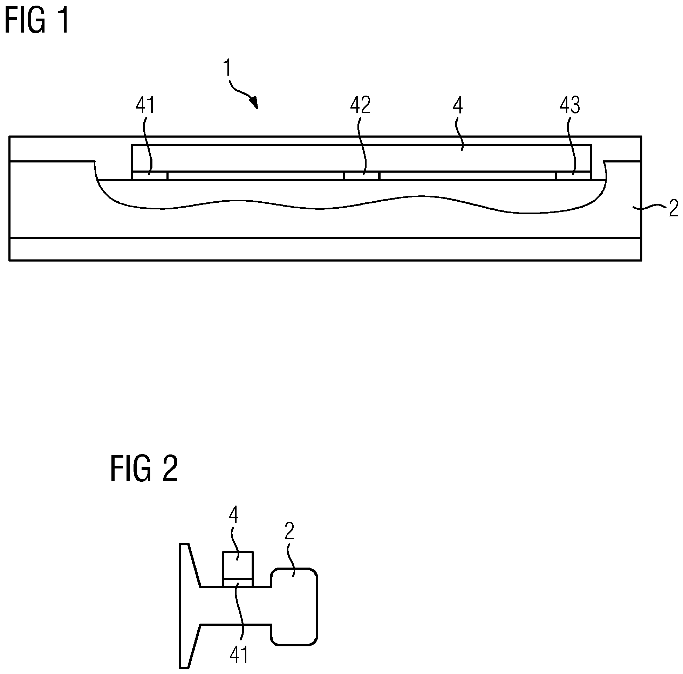

Die Figur 1 zeigt eine Sensorvorrichtung 1 gemäß einem ersten Ausführungsbeispiel der Erfindung aus einer ersten Ansicht. Die Sensorvorrichtung 1 umfasst ein längliches Sensorelement 4 sowie drei magnetische Befestigungselemente 41, 42, 43. Die Sensorvorrichtung 1 ist mittels der drei magnetischen Befestigungselemente 41, 42, 43 an einem Schienenabschnitt 2, das heißt einem Teilbereich einer Schiene, insbesondere einer Eisenbahnschiene, angeordnet beziehungsweise angebracht. Das Sensorelement 4 ist länglich ausgebildet, das heißt es weist ein Aspektverhältnis (Länge/Breite) von größer als eins, insbesondere größer als fünf, auf.

Eines der magnetischen Befestigungselemente 41, 42, 43 ist an einem Ende des Sensorelementes 4 angeordnet. Ein weiteres der magnetischen Befestigungselemente 41, 42, 43 ist an dem weiteren Ende des Sensorelementes 4 angeordnet. Das magnetische Befestigungselement 42 ist in der Mitte des Sensorelementes 4 angeordnet. Die magnetischen Befestigungselemente 41, 42, 43 sind bevorzugt mittels Magnetstreifen ausgebildet. Weiterhin bevorzugt weisen die magnetischen Befestigungselemente 41, 42, 43 eine Ausdehnung entlang der Länge des Sensorelementes 4 auf, die kleiner, insbesondere wesentlich kleiner, als die Länge des Sensorelementes 4 ist. Dadurch wird eine vorteilhafte Dreipunktverbindung zwischen dem Sensorelement 4 und dem Schienenabschnitt 2 ermöglicht. Bevorzugt erstrecken sich die magnetischen Befestigungselemente 41, 42, 43 über die gesamte Breite des Sensorelements 4.

Die magnetischen Befestigungselemente 41, 42, 43 sind im dargestellten Ausführungsbeispiel dem Schienenabschnitt 2 zugewandt. Eine Ausführungsform bei welcher die magnetischen Befestigungselemente 41, 42, 43 dem Schienenabschnitt 2 abgewandt sind und somit das Sensorelement 4 einklemmen kann vorgesehen sein.

Die Figur 2 zeigt die in Figur 1 dargestellte Sensorvorrichtung 1 aus einer zweiten Ansicht.

Die Figur 2 weist dieselben Elemente wie bereits Figur 1 auf. Aus Figur 2 ist das Profil des Schienenabschnittes 2 erkennbar. Die Sensorvorrichtung 1 ist an einem Verbindungssteg des Schienenabschnittes 2 zwischen einem Schienenfuß und einem Schienenkopf des Schienenabschnittes 2 angeordnet.

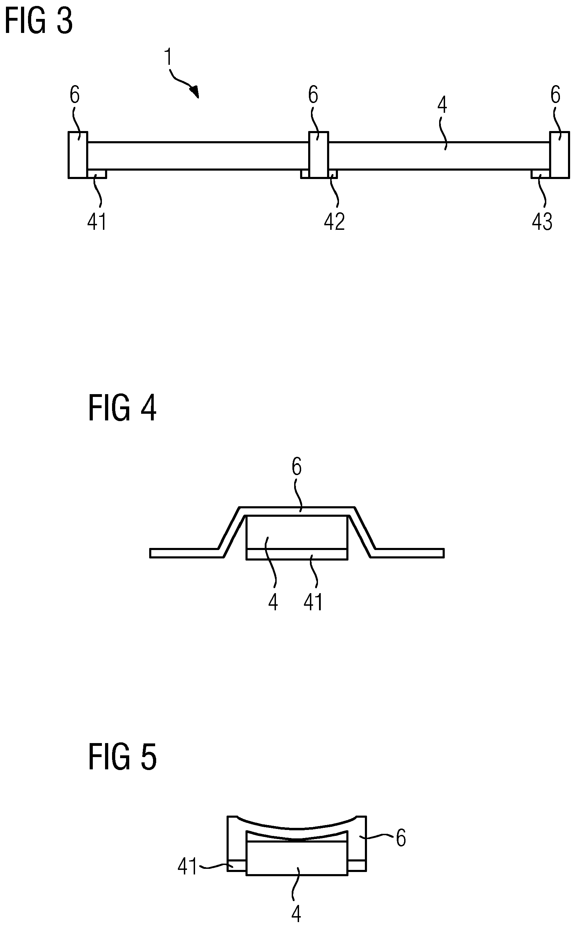

In Figur 3 ist eine Sensorvorrichtung 1 gemäß einer zweiten Ausführungsform der Erfindung aus einer ersten Ansicht dargestellt.

Die Sensorvorrichtung 1 weist hierbei dieselben Elemente wie bereits die in der Figur 1 dargestellt Sensorvorrichtung auf. Demnach kann das unter Figur 1 Gesagte unmittelbar und eindeutig auf die Sensorvorrichtung 1 der Figur 2 übertragen werden.

Ergänzend zur Sensorvorrichtung der Figur 1 weist die in Figur 2 dargestellte Sensorvorrichtung 1 drei Laschen 6 auf. Die Laschen 6 sind zu einer zusätzlichen mechanischen Verbindung mit dem Schienenabschnitt 2 ausgebildet. Die Laschen 6 sind benachbart neben den magnetischen Befestigungselementen 41, 42, 43 angeordnet. Hierbei können die Laschen 6 die Sensorvorrichtung 1 beziehungsweise das Sensorelement 4 an den Schienenabschnitt 2 drücken und kraftschlüssig fixieren. Die Laschen 6 können mittels einer Schweißverbindung und/oder Lötverbindung an dem Schienenabschnitt 2 befestigt werden. Eine Schraubverbindung kann ebenfalls vorgesehen sein.

Die Figur 4 zeigt die in Figur 3 dargestellte Sensorvorrichtung 1 aus einer zweiten Ansicht.

Die Figur 4 weist dieselben Elemente wie bereits Figur 3 auf. Wie aus Figur 4 zu erkennen ist, erstrecken sich die Laschen 6 über das Sensorelement 4 und die magnetischen Befestigungselemente 41, 42, 43. Die Laschen 6 sind hierbei konkav ausgebildet.

Die Figur 5 zeigt eine Sensorvorrichtung 1 gemäß einer dritten Ausführungsform der Erfindung.

Die dargestellte Sensorvorrichtung 1 entspricht im Wesentlichen der in den Figuren 3 und 5 gezeigten Sensorvorrichtung, jedoch mit einer alternativen Ausgestaltung der Laschen 6. Hierbei sind die Laschen 6 im Wesentlichen konvex ausgebildet. Dadurch wird das Sensorelement 4 durch eine Federwirkung der Laschen 6 an den Schienenabschnitt (hier nicht dargestellt) anpressbar beziehungsweise angepresst.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Sensorvorrichtung
- 2: Schienenabschnitt
- 4: Sensorelement
- 6: Lasche
- 41: erstes magnetisches Befestigungselement
- 42: zweites magnetisches Befestigungselement
- 43: drittes magnetisches Befestigungselement

## Patentansprüche

1. Sensorvorrichtung (1) zur Überprüfung eines Schienenabschnittes (2), insbesondere eines Eisenbahnschienenabschnittes, umfassend ein Sensorelement (4) und wenigstens ein magnetisches Befestigungselement (41, 42, 43), wobei die Sensorvorrichtung (1) mittels des magnetischen Befestigungselementes (41, 42, 43) an dem Schienenabschnitt (2) anbringbar ist.

2. Sensorvorrichtung (1) gemäß Anspruch 1, **dadurch gekennzeichnet, dass** diese als Biegesensor mit einem länglichen Sensorelement (4) ausgebildet ist.

3. Sensorvorrichtung (1) gemäß Anspruch 1 oder 2, **dadurch gekennzeichnet, dass** das magnetische Befestigungselement (41, 42, 43) mittels einer stoffschlüssigen Verbindung, insbesondere einer Klebeverbindung, mit dem Sensorelement (4) verbunden ist.

4. Sensorvorrichtung (1) gemäß einem der vorhergehenden Ansprüche, **dadurch gekennzeichnet, dass** das magnetische Befestigungselement (41, 42, 43) als ein Magnetstreifen und/oder eine Magnetfolie ausgebildet ist.

5. Sensorvorrichtung (1) gemäß einem der vorhergehenden Ansprüche, **dadurch gekennzeichnet, dass** das magnetische Befestigungselement (41, 42, 43) wenigstens teilweise in das Sensorelement (4) eingebettet ist.

6. Sensorvorrichtung (1) gemäß einem der vorhergehenden Ansprüche, **dadurch gekennzeichnet, dass** diese ein Klammerelement umfasst mittels welchem diese an dem Schienenabschnitt (2) zusätzlich mechanisch anbringbar ist.

7. Sensorvorrichtung (1) gemäß Anspruch 6, **dadurch gekennzeichnet, dass** zwischen dem Klammerelement und dem Sensorelement ein Pufferelement, insbesondere ein Schaumstoff, angeordnet ist.

8. Sensorvorrichtung (1) gemäß einem der vorhergehenden Ansprüche, **dadurch gekennzeichnet, dass** diese eine Mehrzahl von Laschen (6) aufweist, wobei die Sensorvorrichtung (1) mittels der Laschen (6) am Schienenabschnitt (2) mittels einer Schweißverbindung und/oder Lötverbindung anbringbar ist.

9. Sensorvorrichtung (1) gemäß einem der vorhergehenden Ansprüche, **dadurch gekennzeichnet, dass** diese wenigstens drei magnetische Befestigungselemente (41, 42, 43) umfasst, wobei jeweils eines der magnetischen Befestigungselemente (41, 42, 42) in den Endbereichen und in einem Mittenbereich der Sensorvorrichtung (1) angeordnet ist.

10. Sensorvorrichtung (1) gemäß Anspruch 9, **dadurch gekennzeichnet, dass** das diese ein Prüfelement umfasst, wobei mittels des Prüfelementes eine elektrische Spannung zwischen wenigstens zwei der magnetischen Befestigungselemente (41, 42, 43) anlegbar ist.

11. Verfahren zur Überprüfung eines Schienenabschnittes (2) mit einer Sensorvorrichtung (1) gemäß einem der vorhergehenden, umfassend die Schritte:
- Anbringen der Sensorvorrichtung (1) mittels des wenigstens eines magnetischen Befestigungselementes (41, 42, 43) an dem Schienenabschnitt (2); und
- Erfassen wenigstens eines Messwertes mittels des Sensorelementes (4).

12. Verfahren gemäß Anspruch 11, bei dem die Sensorvorrichtung (1) mittels einem Induzieren von Wirbelströmen in den Schienenabschnitt (2) von diesem abgelöst wird.
